# EUROPEAN PATENT APPLICATION

(11) **EP 3 760 430 A1**
(43) Date of publication of application: **06.01.2021**
(21) Application number: 20184320.8
(22) Date of filing: 06.07.2020
(51) Int. Cl.: B32B 5/02, B32B 5/18, B32B 5/24, B32B 5/32, B32B 7/12, B32B 7/14, B32B 27/06, B32B 27/32, B32B 27/40, A41D 31/02, A41D 31/06, A41D 31/102, B32B 5/26, B32B 5/20

(54) **MULTI-LAYERED COMPOSITE MATERIAL COMPRISING AN IMPERMEABLE LAYER AND RELATED PRODUCTION METHOD**

(30) Priority: 04.07.2019 IT 201900010911
(71) Applicant: Lorenzi S.r.l., 35010 Vigonza (PD) (IT)
(72) Inventor: LORENZI, Lorenzo, 30035 Mirano (IT)
(74) Representative: Morabito, Sara

(57) **Abstract**

A multi-layered composite material (100) comprises an impermeable layer (1) which is capable of preventing the penetration of water, an insulating layer (2) which is associated with said impermeable layer (1) in order to thermally insulate the multi-layered material (100), wherein said impermeable layer (1) and the insulating layer (2) are breathable in order to allow the passage of water vapour through them and the discharge of water vapour from the multi-layered composite material (100) and wherein the insulating layer (2) is produced from open-cell polyurethane foam having a density between 200 and 500 kg/m³, preferably approximately of 300 kg/m³.

## Description

The present invention relates to multi-layered composite materials which are impermeable, water-repellent and at the same time breathable. The composite materials of the invention allow, moreover, to provide good thermal insulation.

The materials of the invention are particularly suitable to be used for making clothing items in particular sportswear, parts of footwear, etc.

### TECHNOLOGICAL BACKGROUND OF THE INVENTION

In the technical clothing sector, materials that combine two different characteristics, that is that are impermeable so as to be used under various climatic conditions and which are at the same time breathable in order to increase user comfort, are increasingly in demand.

In order for technical clothing, or technical footwear, to be used under various climatic environments, it is necessary that they also provide a certain thermal insulation.

Materials provided with a layer of neoprene, or similar materials, which are impermeable and which provide a certain insulation against cold, are known. However, said materials are not breathable despite them being impermeable and, therefore, do not allow to eliminate the internal humidity generated by the user's body towards the outside.

When the excess body humidity cannot be discharged, it accumulates inside the garment or shoe and creates a feeling of wet on the user and, hence, of discomfort. This in addition to increasing the annoyance for the user also creates a potential loss of the heat generated by the body.

Examples of impermeable materials used for clothing or footwear, especially technical or sports ones, are expanded PTFE, e.g. GORE-TEX® and eVENT®. However, said materials, while being impermeable, provide negligible, or zero, thermal insulation.

Other examples of impermeable materials are, for example, elastomeric foams in SBR, NBR and CR, which however are not breathable. Said materials would be thermally insulating as well as impermeable but nevertheless the accumulation of vapour and sweat limits this effect.

Therefore, accumulations of sweat and humidity are generated also with said materials which are annoying for the user and which, above all, greatly reduce the comfort of use. An object of the invention is to provide a composite material which is at the same breathable, impermeable and also thermally insulating.

Another object is to provide a multi-layered composite material which allows effective transpiration of the water vapour to the outside in order to avoid accumulations of water vapour in contact with the user.

Another object is to provide a composite material that has a high adaptability so as to be used to make clothing items and/or parts of footwear.

Another object of the invention is to provide an improved method for producing a multi-layered composite material which is at the same time impermeable, breathable and thermally insulating.

Another object of the invention is to provide an improved method for producing a multi-layered composite material which allows to maintain the breathable and impermeable properties of the materials used.

According to the invention a multi-layered composite material comprising an impermeable layer which is capable of preventing the penetration of water and an insulating layer which is associated with said impermeable layer in order to thermally insulate the multi-layered material is provided, wherein said impermeable layer and said insulating layer are breathable in order to allow the passage of water vapour through them and the discharge of water vapour from said multi-layered composite material and wherein said insulating layer is produced from open-cell polyurethane foam having a density between 200 and 500 kg/m³, preferably approximately of 300kg/m³.

The multi-layered material of the invention has excellent insulating and it has at the same time breathable properties.

In particular, the aforesaid density values of the insulating layer allow to optimize the flow of vapour through the insulating layer and, therefore, the breathability of the multi-layered material of the invention.

Said density values allow to obtain an optimal flow of water vapour through the insulating layer.

Said breathability values of the insulating layer of the multi-layered material of the invention allow to have a high flow of water vapour and to avoid stagnations of vapour and/or humidity in contact with the multi-layered material of the invention.

The open-cell polyurethane foam of the insulating layer advantageously has a breathability of approximately 1300 g/m²/24h.

Said value was calculated using the measurement indications presented in UNI 4818-26a:1992 standard on the breathability of the materials of the materials based on the flow of water vapour allowed through the various materials themselves. The vapour flow is measured in g/m²/24h.

A material that allows a flow of vapour <200 g/m²/24h is usually considered as a non-breathable material, a material that allows a flow of 200 and 500 g/m²/24h is usually considered as a little breathable material; a material that allows a flow between 500 and 750 g/m²/24h is usually considered as a medium breathable material; a material that allows a flow between 750 and 900 g/m²/24h is usually considered as a material having a good breathability, a material that allows a flow between 900 and 1200 g/m²/24h is usually considered as a material having a very good breathability and finally a material that allows a flow of vapour > 1.200 g/m²/24h is usually considered as a material with excellent breathability.

The material of the insulating layer of the multi-layered material of the invention allows a flow >1300 g/m²/24h.

A medium performance membrane has a breathability in a range between 800-900g/m²/24h, while a membrane having a breathability that allows a vapour flow > 1200 g/m²/24h is considered an excellent product with excellent breathability.

However, in known membranes, the performance in terms of flow vapour usually decreases in multi-layered materials, that is, by coupling said membranes to other materials also through coupling by dots.

For example, in a medium membrane with a breathability between 800-900 g/m²/24h when coupled with a light fabric, a decrease in breathability to approximately 700 g/m²/24h is noted.

In the multi-layered material of the invention, excellent breathability values are maintained even after the coupling between the insulating layer and the impermeable layer.

Thanks to the characteristics of the insulating layer of the material of the invention and/or to the characteristics of the impermeable layer of the material of the invention, a multi-layered material is obtained having a high breathability.

Therefore, the insulating layer of the material of the invention has excellent breathability. The polyurethane foam of the insulating layer is at the same time thermally insulating allowing to avoid heat losses and also breathable allowing to avoid accumulations or stagnations of humidity.

Thanks to the invention a multi-layered composite material having improved breathability characteristics and which is at the same time thermally insulating and impermeable is obtained.

In a preferred version the polyurethane foam of the insulating layer is obtained from a water-based polyurethane.

The use of a water-based polyurethane allows to obtain a high synergy between the impermeable layer and the insulating layer which allows to optimize the breathability of the multi-layered material of the invention.

The water-based polyurethane is highly hydrophilic, which allows to optimize the flow of vapour through the insulating layer and, therefore, the breathability of the material of the invention.

The hydrophilic polyurethane foam is placed inside the garment, i.e. facing towards or in contact with the user.

Its characteristic of attracting and collecting vapour produces a comforting effect for the user. At the same time, by capturing the humidity and bringing it into contact with the membrane, it allows the membrane to work under conditions of maximum efficiency. In other words, the difference in vapour pressure between one layer and the other one of the membrane is maximized, thus improving the flow to the outside.

Advantageously, the water-based polyurethane foam of the insulating layer is obtained from an aqueous dispersion of a desired quantity of a polyol to which a desired quantity of crosslinking isocyanate is added.

This allows to obtain a highly hydrophilic polyurethane foam.

The polyol used to obtain the polyurethane foam of the insulating layer is "waterborne", that is obtained in aqueous dispersion and this allows to obtain a high hydrophilicity of the polyurethane foam.

In the multi-layered material of the invention, the impermeable layer is positioned to the outside of the multi-layered material, while the insulating layer is positioned to the inside of the multi-layered material, i.e. the insulating layer is interposed between the user and the impermeable layer.

In one version, the insulating layer is intended to be facing in use to the inside, that is, towards the user of the multi-layered composite material.

Said configuration allows to enhance the properties of the polyurethane foam of the insulating layer.

By positioning the polyurethane foam to the inside, i.e. towards the user, since it is highly hydrophilic, it attracts, absorbs and collects the vapour and sweat of the user and therefore produces a comfort effect for the user.

The polyurethane foam captures the humidity and being highly breathable and allowing a very high flow of vapour, it carries the humidity in the form of vapour through the insulating layer bringing it in contact with the impermeable layer.

Said feature allows to avoid, therefore, accumulations of vapour and humidity inside the insulating layer and, therefore, to maintain high comfort for the user because it does not have a wet sensation in contact with the skin.

This also allows to maintain the efficiency of the insulating layer high in terms of humidity absorption and breathability.

That is, the insulating layer works under a condition of maximum efficiency.

Since the water vapour accumulated by the user is carried towards the impermeable layer, the difference in vapour pressure between the face of the insulating layer facing towards the user and the face of the impermeable layer facing to the outside is maximized, maximizing and optimizing the flow of water vapour through the multi-layered material.

In one version, the impermeable layer is intended to form the outermost face of the multi-layered material.

In one version, the insulating layer is intended to form the innermost face of the multi-layered material, that is, intended to come into contact with the user.

This also allows to greatly increase the comfort for the user both due to the direct and almost immediate absorption of the vapour or sweat generated by the user and due to the high breathability obtained. In another version, the multi-layered material comprises a cover layer associated with the insulating layer of the polyurethane foam positioned so that the insulating layer is interposed between the cover layer and the impermeable layer. The cover layer is intended to be facing towards the user and/or to come into contact with the user.

The cover layer is produced from a material having high humidity absorption characteristics so as to avoid sweat/humidity stagnations on the user's skin.

This allows to optimize the performance of the multi-layered material of the invention. According to the invention, therefore, a multi-layered composite material is obtained which allows efficient transpiration, i.e. an efficient discharge of water vapour from the user to the outside.

With the material of the invention, accumulations or stagnations of sweat or water vapour towards the user are avoided.

In particular, the use of a water-based polyurethane to make the polyurethane foam of the insulating layer with a density between 200 and 500 kg/m³ allows to maximize the flow of water vapour through the insulating layer and, therefore, to optimize the performance of the material of the invention.

Advantageously, the insulating layer has a thickness between 0.3 and 2.0 mm, preferably between 0.5 and 1.5 mm.

Preferred values of the thickness of the insulating layer are, according to the different applications of use, 0.5mm, 1.0 mm and 1.5mm.

This allows to optimize the performance of the multi-layered material of the invention.

In a preferred version the polyurethane foam of the insulating layer is a thermosetting polyurethane foam.

This allows to optimize the properties of the multi-layered material obtained, optimizing the flow of water vapour and, therefore, the breathability of the multi-layered material obtained.

The polyurethane foam of the insulating layer has open cells that are shaped so that the different foam cells are mutually connected and that the polymeric matrix is continuous.

This means that a tortuous but continuous path that connects various porosities and a further tortuous but continuous path that connects various portions of polyurethane matrix can be identified in the insulating layer.

This allows to optimize the flow of water vapour through the insulating layer without affecting the insulating characteristics of the insulating layer.

Therefore, the material of the insulating layer does not substantially hinder the passage of air and vapour through it.

This allows, therefore, to increase the breathability of the polyurethane foam and, therefore, of the insulating layer of the invention.

At the same time the insulating layer is thermally insulating and therefore allows to maintain the user's heat although the material of the invention is used in harsh climates.

The impermeable layer is produced from an impermeable material which is impermeable to water in order to prevent the penetration of water into the multi-layered material of the invention and which is at the same time breathable to allow the discharge of water vapour to the outside.

The impermeable layer is positioned on the side of the multi-layered material facing towards the outside of the multi-layered material and consists of any suitable material known in the sector such as for example GORE-TEX®, Sympatex®, Porelle®, eVent®, or other suitable materials.

On the contrary, as it has been said, the insulating layer in water-based polyurethane foam is positioned on the side of the multi-layered material facing to the inside of the multi-layered material, i.e. from the side intended, in use, to be facing towards the user.

In one version the multi-layered material of the invention comprises a cover layer.

The cover layer is preferably produced from woven or nonwoven fabric, various materials known in the sector and used as linings can be used for the cover layer.

Advantageously, materials that easily absorb humidity are used to make the cover layer. This version is particularly suitable when the material of the invention is intended to be used in contact with a user's skin since the sensation generated on the user is improved.

The material of the cover layer is chosen on the basis of the final use of the multi-layered material of the invention.

In another version, the material of the invention comprises a protective layer applied on the impermeable layer at the opposite side with respect to the insulating layer, so that the impermeable layer is interposed between the insulating layer and the protective layer.

The protective layer allows to protect the impermeable layer in order to prevent it from being damaged.

Advantageously, the protective layer is water repellent, that is, water slides over the protective layer.

This allows the properties of the multi-layered material of the invention to be maintained stable over time.

The protective material is chosen based on the final use of the multi-layered material of the invention.

The protective material is also chosen on the basis of the aesthetic effect that is desired to be achieved with the multi-layered material of the invention.

In some versions the protective layer is provided with a decoration or design to impart a desired aesthetic effect.

In other versions of the multi-layered material of the invention, additional layers can be provided, for example produced with natural or synthetic fabrics, preferably positioned on the side of the breathable layer in polyurethane foam.

In order to optimize the properties of the multi-layered material of the invention, no intermediate layer is provided between the insulating layer in polyurethane foam and the impermeable layer. This allows to optimize the properties of the multi-layered material of the invention by enhancing both the breathability and the thermal insulation of the multi-layered material of the invention.

Advantageously, the insulating layer in expanded polyurethane and the impermeable layer are directly coupled without using adhesives and this allows to optimize the properties of the multi-layered material of the invention.

Each of the layers used in a multi-layered material according to the invention is breathable to allow humidity to flow through the multi-layered material of the invention and be discharged outside.

In the multi-layered composite material of the invention, at least the impermeable layer is impermeable to water to prevent the penetration of water into the multi-layered material of the invention.

In addition to being particularly breathable, the material of the invention is also easily adaptable to various types of support and allows a stable and substantially wrinkle-free coupling with the supports to which it must be coupled.

In a second aspect of the invention, a method is provided for producing a multi-layered composite material comprising the provision of an impermeable layer which is capable of preventing the penetration of water, preparing an aqueous dispersion of a desired quantity of a polyol, adding to said aqueous dispersion a desired quantity of isocyanate for cross-linking so as to obtain a polyurethane compound and an expanding agent in order to allow the formation of a polyurethane foam, subjecting said polyurethane compound to foaming in order to obtain an open-cell polyurethane foam and spreading the polyurethane compound during said foaming on a support layer, subjecting said polyurethane foam and said impermeable layer to lamination so as to mutually associate said polyurethane foam and said impermeable layer so as to form a multi-layered material having an impermeable layer and an insulating layer of polyurethane foam which are mutually associated.

Thanks to the method of the invention, the use of adhesive with respect to the known methods is limited, while obtaining a multi-layered material in which the layers are stably connected to each other.

A multi-layered material is thus obtained in which the impermeable layer and the insulating layer in polyurethane foam are mutually associated and connected without the aid of adhesive.

This allows for a simpler and more ecological process.

In one version the support layer is formed by said impermeable layer, the spreading of the polyurethane foam is therefore carried out directly on said impermeable layer.

In this way the insulating layer in expanded polyurethane and the impermeable layer are directly coupled without the aid if adhesives and in a stable manner, optimizing the properties of the multi-layered material of the invention.

The use of adhesives that could compromise and affect the breathability of the multilayer material is not envisaged. The use of glues or adhesives to mutually associate the insulating layer and the impermeable layer is avoided, thus obtaining a stable coupling between the insulating layer and the impermeable layer.

This allows at the same time to optimize the breathability of the material of the invention and at the same time to obtain an excellent adhesion between the insulating and impermeable layer.

In another version, the support layer is a different layer from the impermeable layer, in which case the method provides for a step in which the support material with the polyurethane foam is applied on said impermeable layer so that said polyurethane foam faces said impermeable layer and is in contact therewith.

Advantageously, the support layer on which the polyurethane foam is spread is preferably transfer paper or release paper.

In this case, the method comprises a separation step in which the release paper is separated from the insulating layer before or after applying said insulating layer on said impermeable layer.

In this case, the spreading may comprise a spreading of a layer of breathable polyurethane adhesive on the polyurethane foam intended to allow the impermeable layer and the insulating layer to be associated.

Alternatively, the method comprises an adhesive deposition step, in which a desired adhesive, preferably of the polyurethane type, is deposited on the insulating layer and/or on the impermeable layer and subsequently a coupling step in which the insulating layer and the impermeable layer are coupled and a lamination step in which the insulating layer and the impermeable layer are laminated together so as to mutually bond and connect them.

Preferably, in this case the adhesive deposition takes place by dots, the so-called "dot lamination" as better explained below.

Advantageously, the polyurethane foam is spread on the support layer in two successive spreading phases, normally called "blades" (strokes) in the jargon.

This expedient allows to obtain a more stable polyurethane foam layer and to better regulate the thickness of the polyurethane insulating layer.

A homogeneous polyurethane insulating layer substantially free of defects or bubbles is obtained.

This also allows to favour the drying and cross-linking of the polyurethane foam and at the same time to avoid that too long drying times are required.

In one version, the support layer consists of a layer of woven material, or nonwoven fabric, suitable for constituting a layer of the multi-layered material of the invention, preferably the innermost layer of the multi-layered material, i.e. facing towards and possibly in contact with the user.

Thanks to the method of the invention it is possible to optimize the contact and the coupling between the insulating layer and the impermeable layer.

In a preferred version of the method of the invention it is envisaged to apply some of the multi-layered material of the invention, a protective layer to protect the impermeable layer, positioned so that the impermeable layer is interposed between the protective layer and the insulating layer, on the impermeable layer.

In a version of the method of the invention it is provided to add additives to the polyurethane compound, for example to increase the consistency of the foam and prevent its collapse.

In another version of the method of the invention it is provided to regulate the operation of the foaming machine so as to regulate the density of the polyurethane foam of the invention.

In this way, it is possible to obtain a foamed insulating layer having the desired density.

In another version it is provided to apply a cover layer on the insulating layer of the multi-layered material of the invention.

In another aspect of the invention a multi-layered composite material is provided comprising an impermeable layer adapted to prevent the penetration of water, and an insulating layer associated with said impermeable layer adapted to thermally insulate said multi-layered material, wherein said impermeable layer and said insulating layer are breathable to allow the passage of water vapour through them and the discharge of water vapour from said multi-layered composite material and wherein said insulating layer is made of open-cell polyurethane foam having a density between 200 and 500 kg/m³, preferably approximately of 300 kg/m³ wherein said material is obtained by a method comprising the provision of an impermeable layer which is capable of preventing the penetration of water, preparing an aqueous dispersion of a desired quantity of a polyol, adding to said aqueous dispersion a desired quantity of isocyanate for cross-linking so as to obtain a polyurethane compound and an expanding agent in order to allow the formation of a polyurethane foam, subjecting said polyurethane compound to foaming in order to obtain an open-cell polyurethane foam and spreading said polyurethane compound during said foaming on a support layer, subjecting said polyurethane foam and said impermeable layer to lamination so as to mutually associate said polyurethane foam and said impermeable layer so as to form a multi-layered material wherein the impermeable layer and the insulating layer of polyurethane foam are mutually associated.

The impermeable layer and the insulating layer in polyurethane foam are mutually associated directly without the aid of adhesives.

In this way, a multi-layered material having good breathability is obtained and the breathability of the material obtained is avoided.

The term "layer" as used herein means any of a natural or synthetic fabric, foam, polymer, sheet, film and/or cover.

The term "membrane" as used herein means a water-impermeable and vapour-breathable polymer film layer.

The term "multi-layered material" as used herein means a material consisting of a plurality of layers, that is, two or more layers mutually connected to each other.

Each of the various layers in a composite material can be attached to an adjacent layer by means of an adhesive or even in any other suitable way. In the case adhesive is used, dot bonding is preferred to avoid compromising the breathability of the multi-layered material. The term "breathable" as used herein means a layer comprising a substance that allows the passage of water vapour molecules (like in the form of sweat) through the layer, so that the vapour molecules pass from one side of the layer to the other, e.g. from the side closest to the user to the outside to eliminate sweat and avoid unwanted stagnations.

The use of hydrophilic polyurethane allows the vapour to pass through the insulating layer and from here through the impermeable layer. The impermeable layer is compact, i.e. without holes, but due to absorption and deassorption phenomena the water molecules (vapour) transit through the impermeable layer thanks to the vapour pressure gradient.

The term "impermeable" as used herein means a membrane having small-sized pores smaller than a drop of water, thus preventing liquid water molecules from passing through the impermeable layer.

The term "impermeable" as used herein identifies a membrane that allows the passage of water vapour molecules through it and yet prevents the passage of water molecules. The impermeable layer can be compact, i.e. without holes. In this case the passage of water vapour occurs through absorption and deassorption phenomena, the water vapour molecules in fact transit through the impermeable layer thanks to the vapour pressure gradient. Alternatively, the membrane can be provided with small-sized pores, smaller than the size of a drop of water, which therefore allow the passage of water vapor but prevent the passage of water in a liquid state.

The term impermeable indicates any membrane, such as a natural or synthetic fabric, which resists the penetration of water at a hydrostatic head of 1500 mm or greater.

For some applications, a hydrostatic head of 10,000 mm or more, or 20,000 mm or more is recommended.

The breathable and insulating layer is an open-cell foam which has a thermal insulation function and which allows the flow of water vapour through the open-cell foam.

The breathable insulating layer is a water-based open-cell polyurethane foam.

The breathable insulating layer is a hydrophilic water-based open-cell polyurethane foam. Thereby, the vapour passes from one side of the insulating layer to the other one thanks to the fact that the polyurethane is hydrophilic.

The impermeable layer is a compact film, that is without holes, however due to absorption and deassorption phenomena the water molecules, that is the vapour, transit from one side to the other one thanks to the vapour pressure gradient.

The foam of the insulating and breathable layer of the invention in hydrophilic polyurethane combines breathability and insulating capacity. The foam of the insulating and breathable layer of the invention in hydrophilic polyurethane has a very high breathability. The foam of the insulating and breathable layer of the invention in hydrophilic polyurethane is both porous in terms of open cells and hydrophilic thanks to the use of hydrophilic PU. This allows to optimize the breathability of the insulating and breathable layer of the invention.

The characteristics and advantages of the invention will become clearer from the detailed description that follows of some of his preferred embodiment examples illustrated, by way of non-limiting example, with reference to the appended drawings in which:
Figure 1 is an interrupted schematic view of a version of the multi-layered material 100 made according to the invention.
Figure 2 is a graph showing the temperature trend of various materials over time.

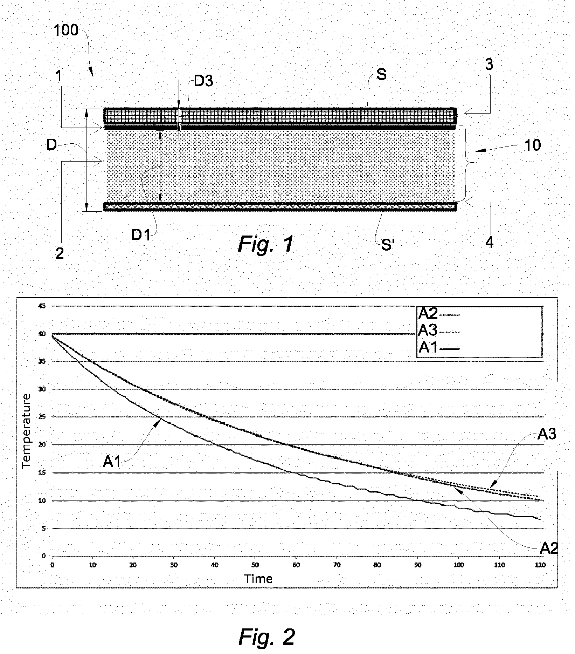

With reference to Figure 1 a multi-layered material 100 produced according to the invention and comprising an internal portion 10 and a first and a second cover portion 11, 12 positioned on opposite sides with respect to the internal portion 10, so that the internal portion 10 is enclosed between cover portions 11, 12, is shown.

The internal portion 10 of the multi-layered material 100 comprises an impermeable layer 1 intended to prevent the penetration of water into the multi-layered material 100.

The impermeable layer is made of a material having suitable water-repellent properties, such as for example GORE-TEX®, Sympatex®, Porelle®, eVent®, or other suitable materials.

In the preferred version, a material having a resistance to the water column > 5000mm is used to produce the impermeable layer.

The multi-layered material 100 further comprises an insulating layer 2 coupled to the impermeable layer 1 and having the ability of thermally insulating the multi-layered material 100.

The insulating layer 2 and the impermeable layer 1 are positioned so that the first and second faces SI, S2 of the internal portion 10 are constituted respectively by the impermeable layer 1 and by the insulating layer 2.

The insulating layer 2 and the impermeable layer 1 are both breathable to allow the passage of water vapour through the multi-layered material 100 and of them and the discharge of water vapour from the multi-layered material 100, as better clarified below.

The insulating layer 2 has a density of between 200 and 500 kg/m³, preferably approximately 300 kg/m³.

Said density values allow to maximize the breathability of the multi-layered material 100 of the invention.

With said values, excellent transpiration is obtained while maintaining a good thermal insulation of the insulating layer 2, as better clarified below.

The insulating layer 2 allows avoiding heat and also breathable losses allowing to avoid accumulations or stagnations of humidity.

The insulating layer 2 is produced from open-cell polyurethane foam obtained from a water-based polyurethane.

The open-cell polyurethane foam of the insulating layer 2 advantageously has a breathability of approximately 1300 g/m²/24h.

In addition, the water-based polyurethane foam of the insulating layer has a high hydrophilicity, i.e. capability of absorbing water or humidity, this allows to avoid stagnations of liquids on the user, as better clarified below.

The water-based polyurethane is highly hydrophilic, which allows to optimize the flow of vapour through the insulating layer 2 and, therefore, the breathability of the multi-layered material 100 of the invention.

The polyurethane foam of the insulating layer 2 allows to maximize the flow of water vapour through the insulating layer 2 and, therefore, through the multi-layered material 100 of the invention, optimizing the performance of the multi-layered material 100 of the invention.

Tests have shown that in the material of the invention there is a high synergy between the impermeable layer 1 and the insulating layer 2 which allows to optimize the breathability of the multi-layered material of the invention.

Furthermore, the coupling between the impermeable layer 1 and the insulating layer 2 does not cause a decrease in the breathability of the material of the insulating layer and/or of the impermeable material, i.e. does not compromise the final breathability properties of the multi-layered material of the invention.

The insulating layer 2 has a thickness D1 of between 0.3 and 2.0 mm, preferably between 0.5 and 1.5 mm.

With said values, excellent breathability is obtained while maintaining a good thermal insulation of the insulating layer 2.

In this way, a multi-layered material 100 is obtained which allows to guarantee high comfort for the user.

The water-based polyurethane foam of the insulating layer 2 is obtained from an aqueous dispersion of a desired quantity of a polyol to which a desired quantity of cross-linking isocyanate is added.

This allows to obtain a highly hydrophilic polyurethane foam for the insulating layer 2.

This feature allows to further increase the breathability of the multi-layered material of the invention.

In particular, the hydrophilicity and density of the insulating layer 2 allow to increase the properties of the multi-layered material of the invention.

The polyol used to obtain the polyurethane foam of the insulating layer 2 is "waterborne", that is to say obtained in aqueous dispersion, and this allows to obtain a high hydrophilicity of the polyurethane foam of the insulating layer 2.

The density and hydrophilicity values of the insulating layer 2 allow to obtain an optimal flow of water vapour through the insulating layer 2.

This allows to optimize the performance of the multi-layered material 100 of the invention. The polyurethane foam of the insulating layer 2 has open cells shaped so that the different cells of the foam are mutually connected and that the polymeric matrix is continuous and so that a tortuous but continuous path can be identified in the insulating layer 2 which connects various porosities as well as a further tortuous but continuous path that connects various portions of polyurethane matrix.

The use of an open-cell polyurethane foam allows to prevent the insulating layer 2 from substantially hindering the passage of air and vapour through it.

At the same time, the insulating layer 2 is thermally insulating and therefore allows to maintain the user's heat even if the material of the invention is used in harsh climates.

The polyurethane foam of the insulating layer 2 is in thermosetting polyurethane.

This allows to optimize the characteristics of the multi-layered material 100.

The impermeable layer 1 is produced from an impermeable material which is impermeable to water to prevent the penetration of water into the multi-layered material of the invention and which is at the same time breathable to allow the discharge of water vapour to the outside. The impermeable layer 1 is produced from a suitable material known in the sector such as for example GORE-TEX®, Sympatex®, Porelle®, eVent®, or other materials.

The impermeable layer 1 is produced from a material having a resistance to the water column > 5000mm.

The impermeable layer 1 and the insulating layer 2 are placed in direct contact one on top the other so as to optimize the performance of the multi-layered material 100 of the invention.

The use of adhesives that could compromise and affect the breathability of the multi-layered material is not envisaged.

The impermeable layer 1 and the insulating layer 2 are positioned in the multi-layered material 100 so that in use the insulating layer 2 is facing to the user and the impermeable layer 1 is facing to the outside.

In other words, the first face S1 of the impermeable layer 1 opposite the insulating layer 2 is facing to the outside, while the second face S2 of the insulating layer 2 opposite the impermeable layer 1 is facing towards the user.

Said positioning allows to optimize the properties of the material of the invention, in fact the polyurethane foam of the insulating layer being highly hydrophilic, attracts, absorbs and collects the user's vapour and sweat and therefore produces a comfort effect for the user.

The polyurethane foam captures the humidity and being highly breathable and allowing a very high flow of vapour, it carries the humidity in the form of vapour through the insulating layer 2 bringing it in contact with the impermeable layer 1.

Therefore, accumulations of vapour and humidity inside the insulating layer are avoided. Therefore, the pressure gradient of the water vapour between the two opposite faces of the insulating layer 2 remains practically unchanged and, therefore, the ability to absorb humidity by the insulating layer 2 is maintained over time.

A sort of saturation of the absorption capacity of the insulating layer 2 is therefore avoided. The insulating layer 2 then works under a condition of maximum efficiency.

It also prevents humidity from remaining in contact with the user and, hence, that he does not have a wet sensation in contact with the skin.

Since the water vapour accumulated by the user is carried to the impermeable layer 1, the difference in vapour pressure between the face of the insulating layer facing towards the user and the first face S1 of the impermeable layer 1 facing to the outside is maximized, maximizing and optimizing the flow of water vapour through the multi-layered material 100.

The insulating layer 2 of the multi-layered material 100 of the invention has at the same time excellent breathability, hydrophilicity and is also thermally insulating.

Figure 2 shows a graph showing the temperature trend in a glass of hot water over time.

Figure 2 shows three relative curves:
- curve A1 relating to the temperature trend (T1) in a covered glass of hot water,
- curve A2, relating to the temperature trend (T2) in a glass of hot water covered with SBR foam;
- curve A3, relating to the temperature trend (T3) in a glass of hot water covered with the insulating layer of the invention;

In all three cases the glass contains the same quantity of water, and the initial temperature is 40°C, the external environment has the same temperature and the air of the environment outside the glass is kept at a constant temperature.

The temperature in the glass decreases over time in all three cases.

The thickness of the SBR foam covering and of the insulating layer of the invention is the same and equal to 1 mm.

In the case of the uncovered glass the temperature decreases more rapidly than in the case of the covered glass.

If the glass is covered, the temperature decreases more slowly: with the same amount of time elapsed, the temperature in the glass covered with a 1.0 mm thick SBR foam is higher than that of the uncovered glass. This difference can be approximately 5°C.

As it is known, neoprene is a thermal insulating material that limits the decrease in temperature. With the same thickness and with the insulating material of the invention performances corresponding to those obtained with neoprene are obtained, curves A2 and A3 almost overlap.

Therefore, the insulating layer of the invention is thermally insulating, its thermal insulation capacity being comparable with that of neoprene.

However, the material of the invention, unlike neoprene, is breathable.

This allows, among other things, to enhance and optimize the thermal insulation characteristics.

In the version shown, the multi-layered material 100 also comprises a protective layer 3 applied on the impermeable layer 1 at the opposite side with respect to the insulating layer 2, in such a manner that the impermeable layer 1 is interposed between the insulating layer 2 and the protective layer 3.

The protective layer 3 is applied on the first face S1 of the impermeable layer 1.

The protective layer 3 allows to protect the impermeable layer 1 so as to prevent it from being damaged.

In the version shown, the protective layer 3 is made of water-repellent material.

In the version shown in Figure 1, the multi-layered material 100 further comprises a cover layer 4 associated with the insulating layer 2 so that the latter is interposed between the impermeable layer 1 and the cover layer 4.

The cover layer 4 is applied on the second face S2 of the insulating layer 2 opposite the impermeable layer 1.

The cover layer 4 is produced from woven or nonwoven fabric.

The cover layer 4 is preferably a fabric for use as a lining.

In one version the cover layer 4 is produced in a fabric formed by 90% PA-10% PU and/or having a weight of approximately 90gsm.

In this version, therefore, the opposite free faces S, S' of the multi-layered material 100 are formed respectively by the protective layer 3 and by the cover layer 4.

Furthermore, in this version, the protective layer 3 and the cover layer 4 respectively form the first and second peripheral portions of the multi-layered material 100, however in other versions the peripheral portions can be formed by a different number of layers having characteristics different from those discussed above.

The cover layer 4 is intended to be positioned in use towards or in contact with the user's skin. Preferably, the cover layer 4 is produced from a material having excellent hydrophilicity to absorb vapour or humidity generated in contact with the user's skin.

In other versions not shown, the cover layer and/or the protective layer can be formed by various layers of identical or different materials.

Furthermore, in other versions, other layers chosen on the basis of the characteristics of the multi-layered material to be made can be provided outside the insulating layer and the impermeable layer.

The materials of the additional layers and/or of the cover layer 4 and/or of the protective layer 3 are breathable to allow the passage of water vapour through the multi-layered material 100.

In one version a multi-layered material 100 has been produced comprising:
- a protective layer 3 made of protective material for external use containing 88% by weight Polyamide and 12% by weight Elastan and having a weight of 115 g/sqm treated with water repellent treatment.
- an impermeable layer 1 made with a microporous polyurethane membrane of approximately 30 microns,
- an insulating layer 2 in water-based open-cell thermosetting expanded polyurethane having a thickness D1 of approximately 1.5 mm and having a density of approximately 300 kg/m³
- a cover layer 4 made of 100% polyester fabric having a weight of approximately 125 g/sqm.

Said multilayer material 100 has been tested according to the standards of the ISO 20345 standard relating to the use in a safety footwear. The multi-layered material of the invention has been tested for breathability and impermeability and resistance to water penetration according to ISO 811, water column. The results obtained are shown in Table 1 below:

| STANDARD | TEST | u.o.m. | REQUIREMENT | RESULT |
|---|---|---|---|---|
| EN ISO 20345 | Permeability to water vapour | mg/(cm²*h) | ≥ 0.8 | 3.4 |
| EN ISO 20345 | Water vapour coefficient | mg/cm² | ≥ 15.0 | 28.3 |
| EN ISO 20345 | Water absorption | % | ≤30 | 3.7 |
| EN ISO 20345 | Water penetration | G | ≤ 0.2 | 0.0 |
| EN ISO 811 | Water column | mm H₂O | -- | 14480 |

The tests carried out show that the multi-layered material of the invention has excellent breathability and at the same time high impermeability

The multi-layered material of the invention therefore allows to reconcile two generally contrasting characteristics. This allows therefore to avoid the penetration of water and at the same time to avoid stagnations of water vapour. The comfort generated for the user is very high.

In another version a multi-layered material is provided formed solely by the insulating layer 2 and the impermeable layer 1, wherein the two opposite sides of the multi-layered material consist respectively of the impermeable layer 1 and insulating layer 2.

The multi-layered material is intended to be positioned in such a manner that the insulating layer 2 is facing in use towards the user while the impermeable layer 1 is facing in use to the outside.

An impermeable layer is first formed in order to produce the multi-layered material of the invention.

An aqueous dispersion of the desired polyol is prepared in the desired quantity and the desired isocyanate crosslinker is subsequently added to it in order to obtain a polyurethane compound in an aqueous dispersion.

This compound is then loaded into a foaming machine suitable for obtaining a polyurethane foam. The foaming machine incorporates air into the polyurethane compound which acts as an expanding agent for the formation of polyurethane foam.

In other versions it can be provided to add an expanding agent different from the air to the polyurethane compound.

In the foaming machine, desired additives are added to the polyurethane compound.

The compound is spread in the foaming step in the liquid state on a desired support material.

The spreading temperature is chosen on the basis of the softening temperature of the compound of polymeric material, so as to spread a compound in a fluid phase on the support material.

The spreading temperature and/or the expanding agent are chosen so that the expanding agent is activated during the spreading so as to cause the formation of the foam of the polyurethane compound.

The expanding polyurethane foam is spread through a spreading head on the support material in two successive spreadings, normally called in the jargon "blades".

At least two separate spreading heads are used to spread the polyurethane compound, each spreading head deposits a defined thickness of fluid polyurethane foam compound on the support material.

In other versions, the polyurethane foam is spread on the support material in a plurality of spreading steps other than two.

After a single spreading phase, the polyurethane foam is dried in special ovens to cause the cross-linking and hardening of the foam and the completion of the foaming step.

The provision of a plurality of foaming steps interspersed with drying steps allows to obtain a more stable polyurethane foam layer and to better regulate the thickness of the polyurethane insulating layer.

Between two successive spreading coats, it is provided to dry the deposited coat of polyurethane foam, so as to trigger the cross-linking of the polyurethane resin and end the foaming phase.

Drying is advantageously carried out in a special drying oven.

A homogeneous polyurethane insulating layer substantially free of defects or bubbles is obtained.

This also allows to favour the drying and cross-linking of the polyurethane foam and at the same time to avoid that too long drying times are required.

In one version the support material consists of the impermeable layer 1.

In this version there is a direct coupling between impermeable layer 1 and insulating layer 2.

The use of glues or adhesives to mutually associate the insulating layer 2 and the impermeable layer 1 is avoided, obtaining at the same time a stable coupling between the insulating layer 2 and the impermeable layer 1.

Addtionally, In this case, moreover, by subjecting the polyurethane foam and the cover layer 4 to lamination so as to mutually associate the polyurethane foam and the cover layer 4, a direct coupling is made between the insulating layer 2 and the impermeable layer 1 and also between the insulating layer 2 and protective layer 4.

In another version, the support layer consists of the cover layer 4. In this case there is a direct coupling between the insulating layer 2 and the cover layer 4.

In this case, moreover, by subjecting the polyurethane foam and the impermeable layer 1 to lamination so as to mutually associate the polyurethane foam and the impermeable layer, a direct coupling is made between the insulating layer 2 and the cover layer 4 and also between the insulating layer 2 and impermeable layer 1.

In another version the support layer is a layer which is not intended to be part of the multi-layered material of the invention and which will subsequently be removed, preferably the support layer is transfer paper or release paper.

Subsequently the support material provided with the layer of polyurethane foam is coupled to the impermeable layer so that the insulating layer is facing towards and is in contact with the impermeable layer.

An intermediate multi-layered material is thus obtained having a support layer on which a layer of polyurethane foam corresponding to the insulating layer of the multi-layered material to be formed is deposited.

In this case, a final spreading step is provided for, wherein a liquid polyurethane adhesive is spread on the polyurethane foam and/or on the impermeable layer to allow the insulating layer to be bonded on the impermeable layer.

In one version, the polyurethane adhesive is spread evenly on the surface of the insulating and/or impermeable layer.

Alternatively, the polyurethane adhesive is spread only on certain areas of the surface of the insulating layer, as better explained below.

In any case, even in the case of adhesive spread over the entire surface of the insulating layer, the breathability of the multi-layered material of the invention is maintained.

The impermeable layer and the intermediate multi-layered material are then subjected to lamination so as to be mutually coupled.

The impermeable layer and the insulating layer are hot pressed to activate the polyurethane adhesive and be mutually bonded.

Alternatively, it can be provided to apply a special adhesive on the insulating layer applied on the support layer and/or on the impermeable layer and subsequently mutually associate the insulating layer and the impermeable layer.

The so-called dot lamination is used, i.e. a bonding by dots.

Through dot bonding, 2 adhesive dots are applied on the surface of the impermeable layer 1 and/or of the insulating layer, suitably spaced on the surface of the impermeable layer 1 and/or of the insulating layer 2.

The position, the dimensions and the density of the adhesive dots are chosen on the basis of the final use of the multi-layered material of the invention and the sealing that is desired between the impermeable layer and the insulating layer.

In the preferred version, a reactive polyurethane-based adhesive is used.

In one version, it can also be provided to apply adhesive along one of the edges of the impermeable layer 1 and/or of the insulating layer 2 to facilitate the adhesion of the impermeable layer 1 and/or the insulating layer 2.

The provision of a bonding by dots makes it possible not to affect the breathability characteristics of the multi-layered material of the invention while allowing good adhesion between the impermeable layer 1 and the insulating layer 2.

Subsequently the impermeable layer 1 and the insulating layer 2 mutually coupled by means of the adhesive are subjected to calendering to be coupled and subsequently are conveyed to a drying oven to cause the irreversible cross-linking of the polyurethane adhesive and therefore the stable bonding between the two layers.

A multi-layered material is thus obtained in which the impermeable layer and the insulating layer are mutually connected in a stable manner.

Other types of layers can be associated with this multi-layered material to be positioned on the side of the insulating material and/or on the side of the impermeable material.

Such additional layers can be for example those described above with reference to Figure 1. If an additional layer associated with the insulating layer is provided for, such as for example the cover layer, it is possible to spread the insulating layer directly on the additional layer and avoid using the release paper. In this case, the additional layer is used as a support material for producing the insulating layer.

The additional layers are advantageously coupled to the impermeable layer and/or to the insulating layer through coupling by dots, as previously discussed, in order not to affect the breathability characteristics of the multi-layered material of the invention.

A multi-layered material suitable for various uses is obtained which is both breathable and impermeable and which is suitable for various uses. The material of the invention is also suitable for being associated with various supports.

## Claims

1. Multi-layered composite material (100) comprising an impermeable layer (1) which is capable of preventing the penetration of water and an insulating layer (2) which is associated with said impermeable layer (1) in order to thermally insulate the multi-layered material (100), wherein said impermeable layer (1) and said insulating layer (2) are breathable in order to allow the passage of water vapour through them and the discharge of water vapour from said multi-layered composite material (100) and wherein said insulating layer (2) is produced from open-cell polyurethane foam having a density between 200 and 500 kg/m³, preferably approximately of 300 kg/m³.

2. Material according to the preceding claim, wherein said insulating layer (2) is formed by a polyurethane foam which is obtained from a water-based polyurethane, preferably of the type with open cells, in a greatly preferred manner from an open-cell polyurethane foam which is formed so that the different cells of the foam are mutually connected and the polymer matrix is continuous.

3. Material according to claim 1 or claim 2, wherein said insulating layer (2) has a thickness (D1) between 0.3 and 2.0 mm, preferably between 0.5 and 1.5 mm.

4. Material according to any one of the preceding claims, wherein said insulating layer has a breathability >1300 g/m²/24h.

5. Material according to any one of the preceding claims, wherein said impermeable layer has a resistance to a water column >5000 mm.

6. Material according to one of the preceding claims, wherein said insulating layer (2) is formed by a thermosetting polyurethane foam.

7. Material according to one of the preceding claims, wherein said insulating layer (2) is directly coupled to said impermeable layer (1), therefore without the aid of glues or adhesives.

8. Material according to one of the preceding claims, wherein said insulating layer (2) is spread directly on said impermeable layer (1) without the aid of glues or adhesives.

9. Material according to any one of the preceding claims and further comprising a cover layer (4) which is associated with said insulating layer (2) in such a manner that said insulating layer (2) is interposed between the impermeable layer (1) and the cover layer (4), said cover layer (4) preferably being produced from woven or nonwoven fabric..

10. Material according to any one of the preceding claims and further comprising a protective layer (3) which is applied to said impermeable layer (1) at the opposite side with respect to said insulating layer (2) in such a manner that said impermeable layer (1) is interposed between said insulating layer (2) and said protective layer (3), said protective layer preferably being produced from fabric which is intended for external use, for example, of fabric formed by 90% PA-10% PU and having a basis weight of approximately 90 gsm.

11. Method for producing a multi-layered composite material (100) comprising the provision of an impermeable layer (1) which is capable of preventing the penetration of water, preparing an aqueous dispersion of a desired quantity of a polyol, adding to said aqueous dispersion a desired quantity of isocyanate for cross-linking so as to obtain a polyurethane compound and an expanding agent in order to allow the formation of a polyurethane foam, subjecting said polyurethane compound to foaming in order to obtain an open-cell polyurethane foam and spreading the polyurethane compound during said foaming on a support layer (1, 4), subjecting said polyurethane foam and said impermeable layer to lamination so as to mutually associate said polyurethane foam and said impermeable layer (1) so as to form a multi-layered material having an impermeable layer and an insulating layer of polyurethane foam which are mutually associated.

12. Method according to the preceding claim, wherein said support layer is formed by said impermeable layer (1), said spreading being carried out directly on said impermeable layer (1).

13. Method according to claim 11, wherein the support layer is formed by a different layer from said impermeable layer, in this case said method comprising applying said support layer and said insulating layer (2) to said impermeable material (1) and laminating said insulating layer (2) and said impermeable layer (1) in order to mutually couple them.

14. Method according to the preceding claim and further comprising a deposition step of adhesive on said support layer and/or on said impermeable material in order to mutually couple them, said deposition step comprising depositing a plurality of adhesive spots on said insulating material and/or on said impermeable material.

15. Material according to one of claims 1 to 10, wherein said material is obtained by the method according to claim 11 or 12.
